# EUROPEAN PATENT APPLICATION

(11) **EP 1 927 280 A2**
(43) Date of publication of application: **04.06.2008**
(21) Application number: 07111989.5
(22) Date of filing: 06.07.2007
(51) Int. Cl.: A01K 1/015

(54) **Method and plant for manufacturing of bedding for animals and such bedding**

(30) Priority: 30.11.2006 DK 200600314 U
(71) Applicant: Nielsen, Jan, 7900 Nykobing Mors (DK)
(72) Inventor: Nielsen, Jan, 7900 Nykobing Mors (DK)
(74) Representative: Nielsen, Leif

(57) **Abstract**

There is disclosed a method for producing bedding for animals in stable facilities and based on vegetable straw which is finely cut. The finely cut straw is pelletized at such a pressure that heating to a temperature above 70°C, preferably above 80°C, is produced.

Sterilisation of the material due to the temperatures produced at the heating during pelletizing is achieved.

Furthermore, protruding fibre ends or straw parts from the fibre bundles/the short straws at the pressing/compression performed at the pelletizing, will be mashed and crushed so that afterwards they appear softened as the cell structure in the elementary fibres and the straw parts is crushed.

Thereafter comminution of pelletized material is performed. Hence is formed loose bedding consisting of individual bundles of elementary fibres/short straw parts.

## Description

### Field of the Invention

The present invention concerns a method for producing bedding for animals in stable facilities and based on vegetable straw which is finely cut.

The invention furthermore concerns a plant for producing bedding for animals in stable facilities and based on vegetable straw, including a plurality of processing members that include a member for fine cutting.

The invention also concerns bedding for animals in stable facilities and based on finely cut vegetable straw.

### Background of the Invention

Methods for producing bedding for animals in stable facilities and based on vegetable straw which is finely cut are prior art. For making the bedding, it is thus known that plant fibres are cut up /finely cut for forming short straw parts.

The bedding can be made of straw of various species of grass and grain, as e.g. elephant grass, wheat or barley, or corresponding fibrous biological materials.

It is also prior art to pelletize straw for forming bedding in the shape of pellets.

The prior art bedding appears with elementary fibres in the straw which has been beaten free of mutual bonds at the fine cutting. Thereby fibre ends or straw parts randomly protruding from the fibre bundles/the short straws are formed. After the fine cutting, these protruding fibre ends/straw parts will appear pointed and sharp.

The bedding thus appears with sharp, pointed and cutting members causing problems for many animals.

The bedding is used for various animals, as e.g. poultry, horses, cows, pigs and fur animals. The bedding will be used as a common bedding material or as a ground cover in a stable and has the primary purpose of providing a bed, and at the same time provides for absorption of liquid.

The drawbacks existing by the prior art types of bedding concerns problems caused by the pointed and sharp fibre ends of the straw. This may cause problems for poultry as hard pads under the feet are formed. Furthermore, the sharp and cutting members provided in prior art bedding entails problems with cut or jab injuries on the legs of the cattle and scratches on the udder on cows.

Prior art bedding may also produce problems with the spreading of germs.

Of the prior art types of bedding besides straw, comminuted wood pieces are applied as well as it has also been proposed to use other types of waste products having absorption capability.

In connection with bedding based on finely cut vegetable straw, it has been desirable for many years to provide a better bedding whereby the above mentioned injuries on the animals are avoided, and where at the same time a hygienic product is obtained without the risk of spreading germs. Furthermore, it is also desirable that the bedding has good absorption capacity in order to absorb moisture and thus produce a dry bed or ground cover in a stable. Additionally, it is wanted that this bed appear soft of consideration to animal welfare.

### Object of the Invention

It is the object of the present invention to indicate a technically simple method and plant for producing bedding which is sterilised and softened, so that wear and formation of scratches is avoided while at the same time obtaining improved capacity for liquid absorption.

### Description of the Invention

This is achieved by a method of the type mentioned in the introduction which is peculiar in that the finely cut straw is pelletized at such a pressure that heating to a temperature above 70°C, preferably above 80°C, is provided, and that comminution of pelletized material for forming loose bedding consisting of individual bundles of elementary fibres/short straw parts is performed.

The plant according to the invention is peculiar in that it furthermore includes a pelletizing member which is adapted to exert a pressure during pelletizing of finely cut straw so that heating to a temperature above 70°C, preferably above 80°C, is provided, a comminuting member for comminuting pelletized material for forming loose bedding consisting of individual bundles of elementary fibres and short straw parts, and conveying means for transporting the material between the various processing members of the plant.

The bedding according to the invention is peculiar in that it includes individual bundles of sterilised elementary fibres/short straw parts, where the elementary fibres are softened as the cell structure in the elementary fibres and the straw parts are crushed.

By a system according to the present invention it is thus possible in a simple way, namely by a well-known pelletizing process followed by the comminution, to provide a bedding which is loose and consists of individual bundles of elementary fibres/short straw parts which are sterilised by the rise in temperature produced in the pelletizing unit, and where the cell structure in the elementary fibres is crushed and thereby softened so that wear and scratches are avoided. The rise in temperature as well as the softening are achieved by adjusting the pressure in the pelletizing member.

The pressure in the pelletizing unit can be based on press pressure above 1000 bar and preferably also at press pressure above 2000 bar, or even above 2500 bar. Typically, a press pressure about 2000 is applied.

It is noted that the straw parts are also formed of elementary fibres, but by the term "bundles of elementary fibres" is meant units which are formed of a small number of elementary fibres, e.g. in a number down to ten or less elementary fibres, whereas the term "straw parts" designates units with a very large number of elementary fibres, e.g. in a number of 100 or more.

The protruding fibre ends or straw parts from the fibre bundles/the short straws at the pressing/compression performed at the pelletizing will thus be mashed and crushed so that afterwards they appear softened. Furthermore, it has appeared that the bedding will present an elastic effect, which is an advantage in the bed and thereby for animal welfare in the stable.

Simultaneously is achieved sterilisation of the material due to the temperatures produced during the pelletizing.

The heating occurs as a combination of friction heat and compression heat. At the start of the pelletizing, there will be a need for adding heat by heating the die of the pelletizing machine. Hereby is achieved a temperature so that even the first bedding run through the die has the desired temperature. After starting up, there will be no need of adding heat to the process in order to achieve the desired temperatures.

Furthermore, it has appeared that simultaneously there is achieved an enhanced ability of liquid absorption compared with the usual absorption capacity in straw which is only finely cut. This is achieved without needing to add any special absorption substances. It is assumed that this effect is achieved due to the special treatment where the cell structure in the elementary fibres are opened at the crushing occurring during the pelletizing, and where the subsequent comminuting creates a loose structure, exposing the fibres so that liquid transport can occur efficiently to all fibres in the bedding.

In practice, it has appeared that a liquid absorption of about five times the self-weight may be obtained in a bedding according to the invention based on wheat straw, compared with the obtention of a liquid absorption of about twice the self-weight in usual finely cut wheat straw. For further comparison it is to be mentioned that liquid absorption in cuttings is usually about 2.5 times the self-weight. Thus is achieved a markedly and surprisingly high liquid absorption.

According to yet an embodiment, the method according to the invention is peculiar in that heating to a temperature at a level between 120 and 160°C, particularly between 140 and 150°C, in surface temperature is performed. By these temperatures in the matrix of a pelletizing unit, sterilisation is ensured.

In practice it appears that heating to these temperatures at the surface will always ensure a temperature in a central part of a string formed in the pelletizing which is above 70-80°C, which is sufficient to kill all relevant bacteria and viruses.

When speaking of heating to a temperature at a range between 120 and 160°C, the heating at the surface and the temperature induced at the interior of the pelletized product will thus be based on compression temperature and the friction temperature occurring at the surface due to the friction between the straw material and the die of the pelletizing unit.

According to a further embodiment, the method according to the invention is peculiar in that the straw is finely cut in a hammer mill. The hammer mill has appeared to be a suitable unit for cutting/fine cutting the straw. Apart from the cutting, the impacting action in the hammer mill provides free straw parts and bundles of elementary fibres which are suited for the subsequent treatment. At the same time it is noted that the hammer mill is usually operating with a surplus of air so that the hammer mill can be utilised for air transport of the finely cut straw for subsequent treatment.

The subsequent treatment will preferably include cleaning of the material, so that unwanted particles are avoided in the finished product.

According to a further embodiment, the method according to the invention is thus peculiar in that dust and sand separation is performed and excess air is exhausted from the hammer mill in a cyclone before the pelletizing. By this cyclone it will thus be possible to clean the material before the subsequent treatment in a pelletizing unit. By using a cyclone there may at the same time be removed excess air from the hammer mill at an outlet in the top and drawing out of dust and soil, sand particles and other heavy particles which will appear at the bottom of the cyclone.

The straw parts and bundles of the elementary fibres will also come out of the bottom. The material from the bottom of the cyclone is passed into a dust separator consisting of a screw conveyor with a cyclone inlet and with a bottom plate including a sifting sieve that allow sand and soil particles as well as dust to fall out and be collected under the screw conveyor. The screw conveyor will then convey the sifted and finely cut straw fraction to the pelletizing unit.

There may be provided an exchangeable sifting sieve so that one may determine the particle size of the sand and dust screened off.

The finely cut straw may thus fall down into the screw and be transported against the outlet of the screw conveyor and a passage over the sifting sieve will during the course entail that dust and sand particles fall down due to the force of gravity. Alternatively, there may be provided a suction box which is connected with the sifting sieve so that dust and sand particles are sucked through the sieve and then conveyed to deposition.

If desired and the need exists, it may be possible that units for adding/admixing various materials are provided in connection with the screw conveyor. This may e.g. be the case if the straw material is desired admixed with other types of absorbing means, or if addition of chemical agents is wanted for treating the straw material.

According to the invention there will usually be no need for additives for making a bedding with the desired properties for establishing a dry and soft bed providing good animal welfare and well-being in the stable.

According to a further embodiment, the method according to the invention is peculiar in that the pelletized material is cooled at least partly before the comminution. Pelletizing of the material may be effected in a traditional pelletizing unit. The pelletizing unit may be arranged with two, three or more parallel pelletizing presses so that it may be possible to adapt the process and the plant according to the production demand so that the pelletizing unit can run in an optimum manner.

In order to provide desired properties in the material, it is essential that the pelletizing unit is operating at a pressure so that desired temperatures by compression and friction and desired material properties at the pressure action imparted to the straw material during compression in the pelletizing unit are attained.

The material will thus leave the pelletizing unit in the form of an extruded string of material having a high temperature. The string of material is passed through open cooler lines which in principle consist of a row of rings interconnected by longitudinal pipes so that an open path appears in which heat exchange with the surrounding may be effected. The string of material will hereby be cooled by being advanced through the cooler line. The cooler line is thus used for conveying the string of material from pelletizing units to a subsequent comminuting unit.

It is possible to cool the string of material more or less. In practice, the temperature is desired to be maintained in the string of material over a longer period of time in order to ensure that the friction heat has diffused into the central core of the string of material.

However, there is another fact in favour of the string of material not to be conveyed over a long distance in an open cooler line as various displacements occur, depending on the moisture content in the string of material. Since straw has different shear coefficients depending on the moisture content, there will be a risk that the string of material is broken and that parts are laterally displaced. Parts of the string of material may hereby interfere with the pipes/rings of the cooler line, whereby there is a risk that the string of material may get stuck in the cooler line.

This may be solved by providing conveyor means, as e.g. toothed wheels engaging the string of material, and which may produce drawing of the material line so that it is not only pushed through the cooler line by the pelletizing machine but is also pulled through the cooler line by the conveyor means. However, the conveyor means engaging the string of material may cause a partial degrading and cause the material to fall out of the open cooler line.

It is thus preferred that only a partial cooling is performed in the cooler line, and that the string of material is conducted into the comminution unit while it is still warm and coherent.

The comminution unit will usually be provided in the form of a clod crusher which is known from the fertilizer industry where it is utilised for crushing clods in fertilizer. In the clod crusher, a tearing up and comminution of the string of material is effected. The comminuted material then falls down upon a conveyor belt as a comminuted material having loose structure that is made up of individual bundles of elementary fibres and short straw parts.

The loose material of individual bundles of elementary fibres and short straw parts will still have a high temperature. By placing the loose material on the conveyor belt, there is achieved evaporation of moisture from the straw and cooling of the material which still may have a temperature in the magnitude of 50-70°C. The evaporation contributes to the release of water content from the straw material. Hereby may advantageously be achieved a reduction in the water content so that the ensuing bedding may absorb more water.

When the material is placed in loose condition on the conveyor belt, besides the possibility of cooling there will also be a loose structure that may be aftertreated, e.g. to avoid that animals eat the bedding.

According to a further embodiment, the method according to the invention is peculiar in that the comminuted material is treated by spraying with an anti-taste substance. This occurs immediately after the clod crusher and the comminution, while the loose material is located on the conveyor belt moving the loose material away from the comminuting unit. Alternatively, this spraying may be performed later in connection with transport to packing.

Anti-taste substances would be a preferred means of treatment in order to avoid animals using the bedding as feedstuff. A suitable anti-taste substance may e.g. be urine from predators. Practical experiments show that most animals of prey will be indisposed to eat material treated with urine from predators.

When the comminuted and still warm bedding leaves the clod crusher, it is placed, as mentioned above, on a conveyor belt. The conveyor belt may have a length so that cooling of the loose material to room temperatures is achieved. The cooling may be enhanced by leading the conveyor track through cooling zones where removal of water vapours occurs also simultaneously with the removal of heat.

The comminuted material will still contain dust but this will now only be straw dust.

Therefore it is preferred that the loose bedding from the conveyor belt is passed over a vibration conveyor operating as a shaker screen. Alternatively, there may be used a screw conveyor with sifting sieve and built-in exhausting of dust. Hereby, the straw parts and the bundles of elementary fibres will go on to packing/storage whereas straw dust will fall out of the shaker screen and may be sent to depositing.

It is important that the vapours are removed from the loose bedding before the vibration conveyor, as the dust then will not be bonded by condensing of the water vapours due the heating of the straw. Sorted off dust particles will typically be in the magnitude of 1/10 mm or less.

After the vibration conveyor the bedding will be ready for packing. Packing may take place in bags or large sacks. The bedding may also be transferred to containers. Containers may e.g. be of the compactor type with the object of transporting large amounts of bedding in compacted condition.

According to a further embodiment, the method according to the invention is peculiar in that straw with a water content below 18%, preferably below 13%, is used, and that the water content in the comminuted material is brought to a level of about 10% or less. By such a water content the desired absorption capacity in the finished bedding will be obtained.

According to a particular embodiment, the plant according to the invention is peculiar in that a fluffing unit for tearing up bales of straw are disposed before the unit for fine cutting, that the unit for fine cutting is provided in the form of a hammer mill, that the pelletizing unit is arranged with two or more parallel pelletizing presses, that the comminuting unit is provided in the form of a clod crusher, and that the conveying means are selected among air blowers, conveyor belts, shaker conveyors and open cooler lines.

Usually, straw will be provided in the shape of bales that are delivered to the plant. Thus there will be provided a fluffing unit which e.g. may be of the type known from tearing up straw bales in connection with straw-fired units. Using a slowly running fluffing unit is preferred with consideration to noise. However, various units on the market may be used for fluffing, so that the straw is conducted in more or less unbroken form from the fluffing unit to the hammer mill.

When operating the plant, the straw parts will be cut to lengths of 20 mm or less.

With this intention, the hammer mill will in a known way be provided with a screen so that straw parts which are not shortened to this length will be returned for further treatment in the hammer mill.

### Description of the Drawing

The invention will then be explained in more detail with reference to the accompanying drawing, where:
- Fig. 1: shows a schematic drawing of the design of a plant according to the invention; and
- Fig. 2: shows a sketch of a bundle of elementary fibres that have been subjected to retting.

### Detailed Description of the Invention

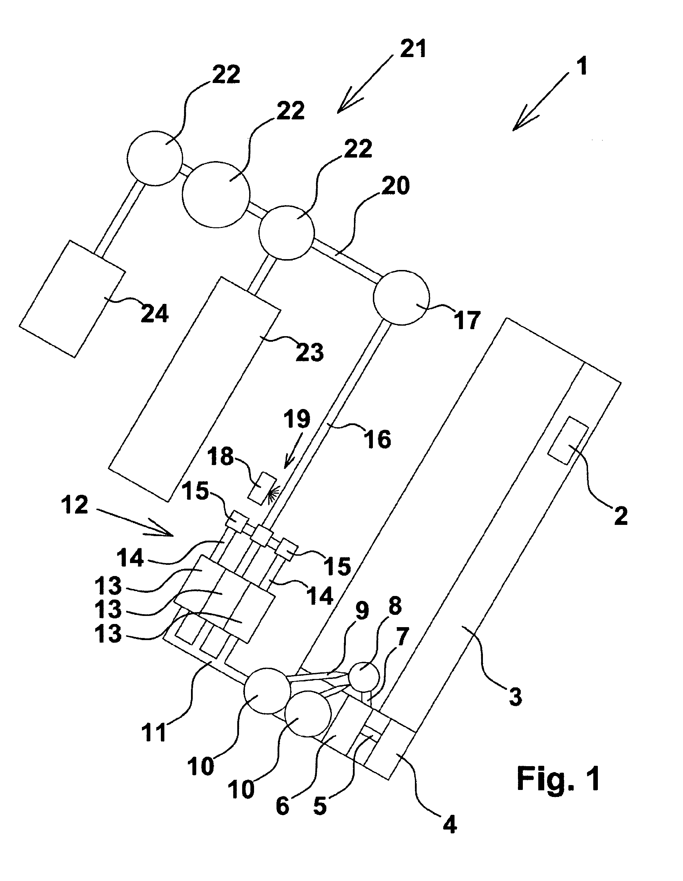

In Fig. 1 there is shown an elementary sketch illustrating the elements that are necessary for understanding the design of a plant according to the invention.

The plant according to the invention is generally designated with the reference 1. The plant is intended for handling straw bales 2, which e.g. may be big bales or round bales. The bales 2 are placed on a conveyor 3 that move them to a fluffing unit 4.

The fluffing unit 4 is used for unravelling and tearing up the material. A screw conveyor 5 moves fluffed material to a hammer mill 6. From the hammer mill 6 the material is conveyed by air transport from the hammer mill via a conveyor pipe 7 to a cyclone separator 8.

At the bottom of the cyclone separator 8 there is provided a dust separator 9. In the shown embodiment, there are provided two dust separators 9, each leading to a storage silo 10. Each of the dust separators 9 includes an inlet from the bottom of the cyclone separator and a screw conveyor as well as a bottom plate with a sifting sieve for removing sand and dust. Thus it will be cleaned and finely cut straw which is passed on to the silos 10.

From the silos there are provided transport ducts 11 which may be screw conveyors leading to a pelletizing unit 12. The pelletizing unit 12 in the shown embodiment consists of three pelletizing presses 13 which via dies are pressing strings of material 14 to a clod crusher 15.

The string of material 14 is passed through a cooler line which is formed of a row of successive rings that are interconnected by longitudinal pipes for forming an open guiding of the string of material so that exchange of temperature with the surroundings can occur.

In the clod crusher 15 the string of material is torn up so that the straw material hence appears as a loose structure of individual straw parts and bundles of elementary fibres. This loose material is placed on a conveyor belt 16 having a length that enables cooling before the material is transferred to a dust cleaning unit in the form of a vibration conveyor 17 which removes straw dust.

Immediately after the clod crushers 15 there is provided a processing unit 18 that enables application of a spray 19 of urine from predators on the loose bedding so that the bedding will not be eaten by the animals.

From the vibration conveyor 17 the finished and cooled bedding is conveyed via a conveyor 20 to an end storage 21. The end storage 21 is shown with three storage units 22. The storage units may either lead to a container 23 or to a packing machine 24 where the bedding is packed in sacks. The bedding will then be ready for distribution.

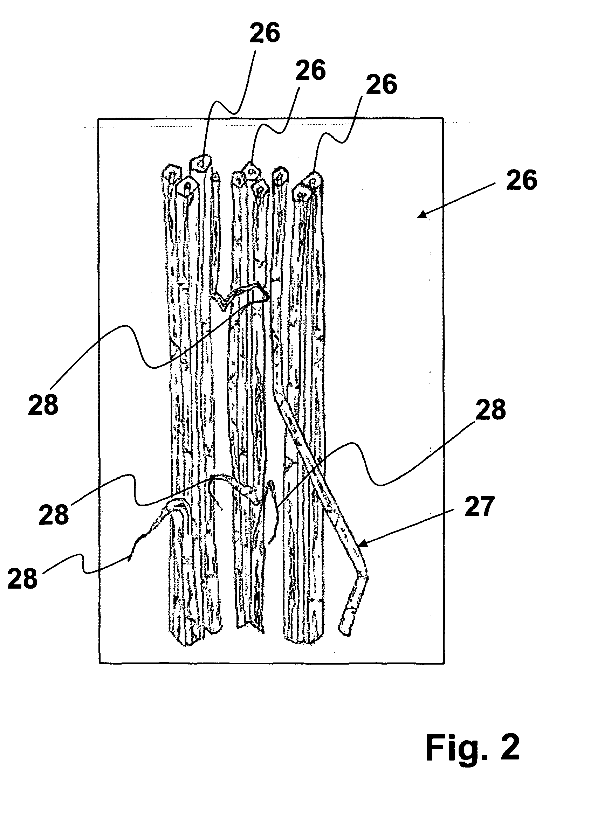

Fig. 2 illustrates a bundle 25 consisting of a number of elementary fibres 26. Fig. 2 illustrates that after retting, elementary fibres will appear with a number of straw parts that protrude from the bundle as indicated by 27, and a number of pointed ends as indicated by 28, projecting from the bundle 25. These projecting parts 27, 28 will usually appear with a sharp and jabbing effect.

At the pelletizing process in the pelletizing unit it is assumed that the projecting elementary fibres or pointed ends 27, 28 are crushed and/or pressed into the bundle so that they afterwards will appear without the jabbing and sharp effect. Furthermore, the cell structure will be mashed at the compression so that the bundle 25 of elementary fibres 26 itself is not acting as a rigid bundle.

In practice it has not been possible to verify or measure these effects, but it is assumed that the compression provides the crushing and pressing in of the projecting parts. Furthermore, it is assumed that lignin is released during the heating so that the bundles of elementary fibres appear with less cohesion which also contributes to the softening.

## Claims

1. A method for producing bedding for animals in stable facilities and based on vegetable straw which is finely cut, **characterised in that** the finely cut straw is pelletized at such a pressure that heating to a temperature above 70°C, preferably above 80°C, is provided, and that comminution of pelletized material for forming loose bedding consisting of individual bundles of elementary fibres/short straw parts is performed.

2. Method according to claim 1, **characterised in that** heating to a temperature at a level between 120°C and 160°C, particularly between 140°C and 150°C, as surface temperature is performed.

3. Method according to claim 1 or 2, **characterised in that** the straw is finely cut in a hammer mill.

4. Method according to claim 3, **characterised in that** dust and sand separation is performed and excess air is exhausted from the hammer mill in a cyclone before the pelletizing.

5. Method according to any preceding claim, **characterised in that** the pelletized material is at least partly cooled before the comminuting.

6. Method according to any preceding claim, **characterised in that** the comminuted material is treated by spraying with an anti-taste substance.

7. Method according to any preceding claim, **characterised in that** straw with a water content below 18%, preferably below 13%, is used, and that the water content in the comminuted material is brought to a level of about 10% or less.

8. A plant for producing bedding for animals in stable facilities and based on vegetable straw, including a plurality of processing units that include a unit for fine cutting, **characterised in that** it furthermore includes a pelletizing unit which is adapted to exert a pressure during pelletizing of finely cut straw so that heating to a temperature above 70°C, preferably above 80°C, is provided, a comminuting unit for comminuting pelletized material for forming loose bedding consisting of individual bundles of elementary fibres and short straw parts, and conveying means for transporting the material between the various processing units of the plant.

9. Plant according to claim 8, **characterised in that** a fluffing unit for tearing up bales of straw are disposed before the unit for fine cutting, that the unit for fine cutting is provided in the shape of a hammer mill, that the pelletizing unit is arranged with two or more parallel pelletizing presses, that the comminuting unit is provided in the form of a clod crusher, and that the conveying means are selected among air blowers, conveyor belts, shaker conveyors and open cooler lines.

10. Bedding for animals in stable facilities and based on finely cut vegetable straw, **characterised in that** it includes individual bundles of sterilised elementary fibres/short straw parts, where the elementary fibres are softened as the cell structure in the elementary fibres and the straw parts are crushed.
